# FASCICULE DE BREVET EUROPEEN

(11) **EP 0 774 102 B1**
(45) Date de publication et mention de la délivrance du brevet: **10.01.2001**
(21) Numéro de dépôt: 96922953.3
(22) Date de dépôt: 19.06.1996
(51) Int. Cl.: F25B 39/04, F28B 9/08, B60H 1/32

(54) **CONDENSEUR A RESERVOIR INTEGRE POUR INSTALLATION DE CLIMATISATION DE VEHICULE AUTOMOBILE**
VERFLÜSSIGER MIT EINBEZOGENEM BEHÄLTER FÜR KLIMAANLAGE EINES KRAFTFAHRZEUGES
CONDENSER WITH A BUILT-IN RECEIVER FOR A MOTOR VEHICLE AIR CONDITIONING UNIT

(30) Priorité: 23.06.1995 FR 9507599
(43) Date de publication de la demande: 21.05.1997
(73) Titulaire: VALEO THERMIQUE MOTEUR S.A., 78321 La Verrière (FR)
(72) Inventeur: BALTHAZARD, Patrick, F-02190 Guignicourt (FR); FAILLE, Philippe, F-51100 Reims (FR)
(74) Mandataire: Bezault, Jean
(86) Numéro de dépôt international: FR9600948
(87) Numéro de publication internationale: WO9701067

(56) Documents cités:
- EP-A- 0 480 330
- FR-A- 2 491 610
- FR-A- 2 521 277
- US-A- 2 028 458
- US-A- 2 105 121
- US-A- 5 088 294
- US-A- 5 172 758
- US-A- 5 186 248
- US-A- 5 228 315

## Description

L'invention concerne un condenseur propre à faire partie d'un circuit de réfrigération, par exemple d'une installation de climatisation pour véhicule automobile.

Elle concerne plus particulièrement un condenseur pour un circuit de réfrigération parcouru par un fluide frigorigène, comprenant un faisceau de tubes monté entre une première boîte collectrice, munie d'une paroi latérale tubulaire, et une seconde boîte collectrice, une entrée pour le fluide frigorigène gazeux, une sortie pour le fluide frigorigène condensé, ainsi qu'un réservoir propre à être traversé par le fluide frigorigène, communiquant, par l'intermédiaire d'au moins une ouverture, avec une partie aval du faisceau, du côté de la sortie du condenseur.

Un condenseur de ce type est décrit dans le brevet US 5 228 315.

Dans un circuit de réfrigération de ce type, le fluide frigorigène est envoyé en phase vapeur surchauffée, sous l'action d'un compresseur, vers le condenseur où il est successivement refroidi ou "désurchauffé", condensé en une phase liquide chaude, puis "sous-refroidi" en une phase liquide froide.

Le fluide frigorigène condensé et refroidi est ensuite envoyé, via un détendeur, vers un évaporateur où il échange de la chaleur avec un flux d'air à envoyer dans l'habitacle du véhicule. Dans l'évaporateur, le fluide frigorigène est transformé en phase vapeur, tandis que le flux d'air est refroidi pour fournir de l'air climatisé. Le fluide frigorigène en phase vapeur quitte l'évaporateur pour regagner ensuite le compresseur et réaliser un nouveau cycle de fonctionnement.

Dans le condenseur du brevet US 5 228 315, le réservoir est disposé parallèlement et à l'extérieur de la première boîte collectrice, l'ensemble étant formé à partir d'une pièce extrudée.

Cette solution connue a notamment pour inconvénient d'augmenter l'encombrement du condenseur, du fait que le réservoir est disposé à l'extérieur de la première boîte collectrice.

On connaît par ailleurs, d'après la Demande de brevet français No 93 10325, un condenseur de ce type, dans lequel le réservoir est intégré au condenseur en étant fixé extérieurement à l'une des boîtes collectrices.

Cette solution connue nécessite de prévoir des connexions et des pattes de maintien entre le réservoir et la boîte collectrice, ce qui complique l'assemblage du condenseur, notamment les opérations de brasage.

Par ailleurs, cette solution connue augmente l'encombrement du condenseur, du fait que le réservoir est disposé à l'extérieur d'une des boîtes collectrices.

De plus, le réservoir extérieur constitue un élément en porte-à-faux qui génère des vibrations au niveau du condenseur.

L'invention a notamment pour but de surmonter les inconvénients précités.

Elle propose en conséquence un condenseur du type défini en introduction, dans lequel le réservoir est réalisé sous la forme d'un récipient présentant une paroi latérale tubulaire et coaxiale à la paroi latérale tubulaire de la première boîte collectrice, espacée à l'intérieur de celle-ci.

Il n'est alors plus nécessaire de prévoir des connexions et des pattes de maintien entre le réservoir et la boîte collectrice, du fait que le réservoir est logé à l'intérieur de la boîte collectrice.

Il est ainsi possible de réaliser en une seule pièce le réservoir et la boîte collectrice, ce qui requiert des opérations d'assemblage moins complexes et moins longues.

Ceci simplifie notablement les opérations de brasage.

Le condenseur de l'invention a aussi pour avantage d'offrir un encombrement réduit, du fait que le réservoir extérieur est supprimé.

En outre, il présente une meilleure tenue aux vibrations du fait qu'il supprime tout élément en porte-à-faux à l'extérieur de la boîte collectrice.

Dans une première forme de réalisation de l'invention, des cloisons transversales sont prévues entre la paroi latérale de la boîte collectrice et la paroi latérale du réservoir pour définir des compartiments périphériques communiquant avec des parties différentes du faisceau de tubes pour permettre une circulation multi-passe du fluide frigorigène dans le faisceau de tubes.

Avantageusement, la paroi latérale du réservoir comprend une ouverture pour l'entrée du fluide frigorigène provenant d'un compartiment périphérique et une sortie pour l'évacuation du fluide frigorigène condensé vers un second compartiment périphérique, lequel communique avec la sortie du condenseur au travers d'une partie du faisceau.

Ainsi, le fluide frigorigène condensé traverse le réservoir et quitte ensuite le condenseur après avoir traversé une partie du faisceau.

En variante, le réservoir comprend une ouverture d'extrémité faisant communiquer l'intérieur du réservoir avec un compartiment qui est prévu dans la première boîte collectrice et qui communique avec la sortie du condenseur, cette sortie étant prévue sur la première boîte collectrice.

Dans cette première forme de réalisation de l'invention, les cloisons transversales sont annulaires et les compartiments périphériques ont également une section de forme annulaire.

Dans une autre forme de réalisation de l'invention, la paroi latérale tubulaire du réservoir s'étend sur une partie de la première boîte collectrice et débouche sur une autre partie de la première boîte collectrice par une extrémité ouverte, une cloison annulaire étant prévue entre la boîte latérale de la première boîte collectrice et la paroi latérale du réservoir au niveau de l'extrémité ouverte de cette dernière.

Ainsi, la paroi latérale du réservoir s'étend seulement sur une partie de la hauteur de la première boîte collectrice.

La seconde boîte collectrice est normalement dépourvue de réservoir et il est alors avantageux que l'entrée et la sortie du condenseur soient prévues sur cette seconde boîte collectrice.

Dans une autre forme de réalisation de l'invention, la seconde boîte collectrice loge également un second réservoir qui communique, par l'intermédiaire d'au moins une ouverture, avec une partie aval du faisceau, du côté de la sortie du condenseur.

De préférence, la seconde boîte collectrice comprend une paroi latérale tubulaire, tandis que le second réservoir comprend également une paroi latérale espacée au moins en partie de la paroi latérale de la boîte collectrice, des cloisons transversales étant prévues entre la paroi latérale de la seconde boîte collectrice et la paroi latérale du second réservoir pour définir des compartiments périphériques communiquant avec des parties différentes du faisceau pour permettre une circulation multi-passe du fluide frigorigène dans le faisceau de tubes.

De préférence, la paroi latérale du second réservoir est tubulaire et coaxiale à la paroi latérale tubulaire de la seconde boîte collectrice, les cloisons transversales étant annulaires et les compartiments périphériques ayant également une section de forme annulaire.

Selon une autre caractéristique de l'invention, la paroi latérale du second réservoir comporte une ouverture faisant communiquer l'intérieur du réservoir avec un compartiment périphérique de la seconde boîte collectrice, dans lequel débouche la sortie du condenseur.

Dans une autre variante de réalisation, le premier réservoir et le second réservoir ont des extrémités ouvertes respectives qui débouchent dans deux compartiments d'extrémité formés respectivement dans la première boîte collectrice et la seconde boîte collectrice, ces deux compartiments d'extrémité communiquant entre eux par une partie des tubes du faisceau.

Cette variante de réalisation offre l'avantage de séparer, dès la première passe du fluide frigorigène, les phases liquide et vapeur afin d'améliorer les performances du condenseur.

Dans la description qui suit, faite seulement à titre d'exemple, on se réfère aux dessins annexés, sur lesquels :
- la figure 1 est une vue en élévation et en coupe partielle d'un condenseur selon une première forme de réalisation de l'invention;
- la figure 2 est une vue en coupe selon l'une ou l'autre des deux lignes II-II de la figure 1;
- la figure 3 est une vue partielle analogue à celle de la figure 1 pour une variante de réalisation;
- la figure 4 est une vue en élévation du réservoir du condenseur de la figure 3;
- la figure 5 est une vue de dessus du réservoir de la figure 4;
- la figure 6 est un détail à échelle agrandie et en coupe du réservoir de la figure 4;
- la figure 7 est une vue partielle en coupe d'un condenseur selon une forme de réalisation non conforme à l'invention telle que revendiquée;
- la figure 8 est une vue en coupe selon l'une ou l'autre des deux lignes VIII-VIII de la figure 7;
- la figure 9 est une vue partielle en coupe d'un condenseur selon une seconde forme de réalisation de l'invention;
- la figure 10 est une vue en coupe selon la ligne X-X de la figure 9;
- la figure 11 est une vue en élévation et partiellement en coupe d'un condenseur selon une troisième forme de réalisation de l'invention;
- la figure 12 est une vue en coupe selon la ligne XII-XII de la figure 11;
- la figure 13 est une vue en coupe selon la ligne XIII-XIII de la figure 10;
- la figure 14 est une vue analogue à celle de la figure 11 dans une variante de réalisation; et
- la figure 15 est une vue en élévation et en coupe partielle d'un condenseur selon une variante de réalisation de la figure 1.

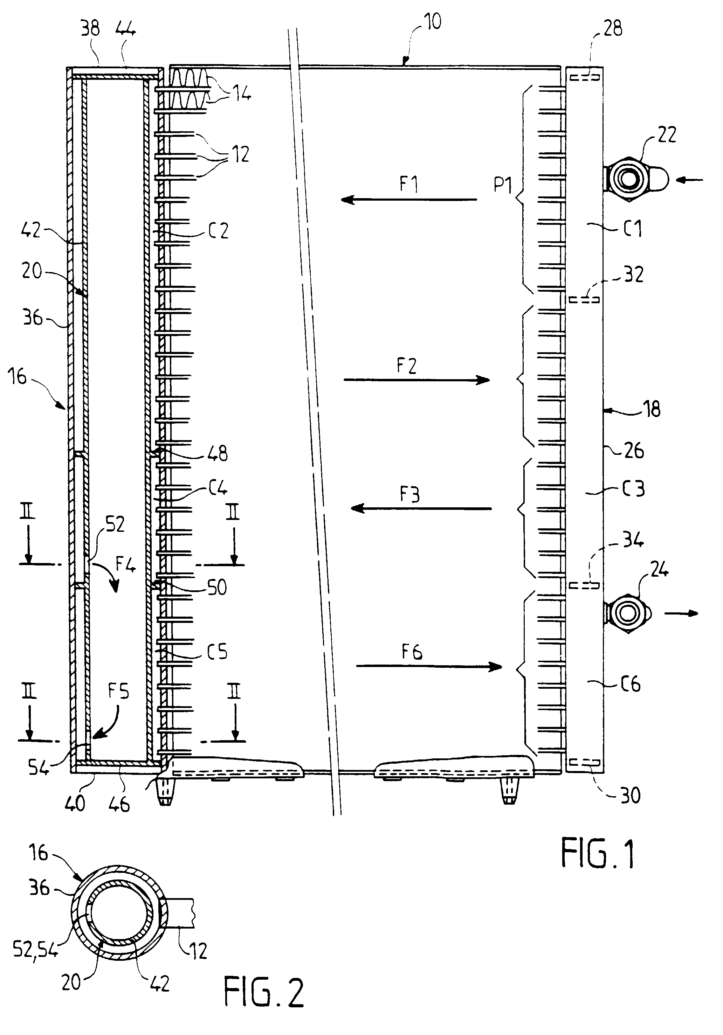

Le condenseur de la figure 1 comprend un faisceau 10 formé d'une multiplicité de tubes plats 12 entre lesquels sont placés des intercalaires 14 de forme générale ondulée, formant ailettes d'échange de chaleur.

Le faisceau 10 est monté entre une première boîte collectrice 16 et une seconde boîte collectrice 18 de forme tubulaire à section circulaire et d'axes parallèles. La boîte collectrice 16 loge intérieurement un réservoir 20, tandis que la boîte collectrice 18 est munie d'une tubulure d'entrée 22 pour l'admission d'un fluide frigorigène sous forme de vapeur surchauffée et d'une tubulure de sortie 24 pour l'évacuation du fluide frigorigène sous forme de phase liquide refroidie. En traversant l'échangeur de chaleur, le fluide frigorigène est successivement refroidi ou "désurchauffé", condensé en phase liquide chaude, puis "sous-refroidi" en phase liquide froide, et cela par échange thermique avec un flux d'air balayant le faisceau 10.

La boîte collectrice 18 est délimitée par une paroi latérale tubulaire 26, fermée à ses deux extrémités par deux parois d'extrémité 28 et 30 et munie de deux cloisons internes 32 et 34 disposées en des endroits choisis. Les tubes 12 du faisceau communiquent avec la boîte collectrice 18 par des ouvertures appropriées ménagées dans la paroi latérale 26.

La première boîte collectrice 16 comprend une paroi latérale tubulaire 36 de section circulaire, de diamètre supérieur à la paroi latérale 26, et munie de deux extrémités ouvertes 38 et 40.

Le réservoir 20 comprend une paroi latérale 42 de forme tubulaire de section circulaire et logée à l'intérieur de la paroi latérale 36. La paroi 42 s'étend sur sensiblement toute la hauteur de la première boîte collectrice (telle que définie entre ses extrémités 38 et 40) et cette paroi latérale 42 est fermée par deux parois d'extrémité 44 et 46 qui se poursuivent jusqu'à l'intérieur de la paroi latérale 36 pour fermer en même temps les extrémités 38 et 40 de la boite collectrice 16.

Par ailleurs, deux cloisons transversales annulaires 48 et 50 sont prévues entre les parois 36 et 42 entre des endroits choisis pour définir des compartiments annulaires dans lesquels débouchent les tubes 12 du faisceau, grâce à des ouvertures ménagées dans la paroi 36.

Le fluide frigorigène peut ainsi circuler dans le condenseur, entre l'entrée 22 et la sortie 24, par un circuit en plusieurs passes, encore appelé "multi-passe". Le fluide gagne tout d'abord un compartiment C1 défini dans la boîte collectrice 18 entre la paroi 28 et la cloison 32. Le fluide frigorigène gagne ensuite (flèche F1), au travers d'une partie P1 du faisceau, un compartiment périphérique annulaire C2 délimité entre les parois 36 et 42 et entre la paroi 44 et la cloison 48. Ensuite, le fluide gagne (flèche F2), au travers d'une partie P2 du faisceau, un compartiment C3 délimité dans la boîte collectrice 18 entre les cloisons 32 et 34. De là, le fluide gagne (flèche F3), au travers d'une partie P4 du faisceau, un compartiment C4 délimité entre les parois 36 et 42 et entre les cloisons 48 et 50.

Le fluide pénètre ensuite dans le réservoir 20 (flèche F4), au travers d'une ouverture d'entrée 52 ménagée dans la paroi latérale 42. Le fluide quitte ensuite le réservoir par une ouverture de sortie 54 (flèche F5) pour gagner un compartiment C5 délimité entre les parois latérales 36 et 42 et entre la paroi d'extrémité 46 et la cloison annulaire 50. Le fluide gagne ensuite (flèche F6), au travers d'une partie P4 du faisceau, un compartiment C6 de la boîte collectrice 18, dans lequel débouche la tubulure de sortie 24.

Lorsque le fluide pénètre dans le réservoir 20 par l'ouverture 52, il est en phase liquide et il est ensuite sous-refroidi lors de son passage par la partie P4 du faisceau, qui est située vers l'aval. Le réservoir 20 permet d'absorber les variations du volume du fluide réfrigérant en fonction des phénomènes de dilatation.

Dans la forme de réalisation de la figure 1, les cloisons transversales 48 et 50 sont formées par des éléments annulaires rapportés entre la paroi latérale 36 de la boîte collectrice 16 et la paroi latérale 42 du réservoir 20.

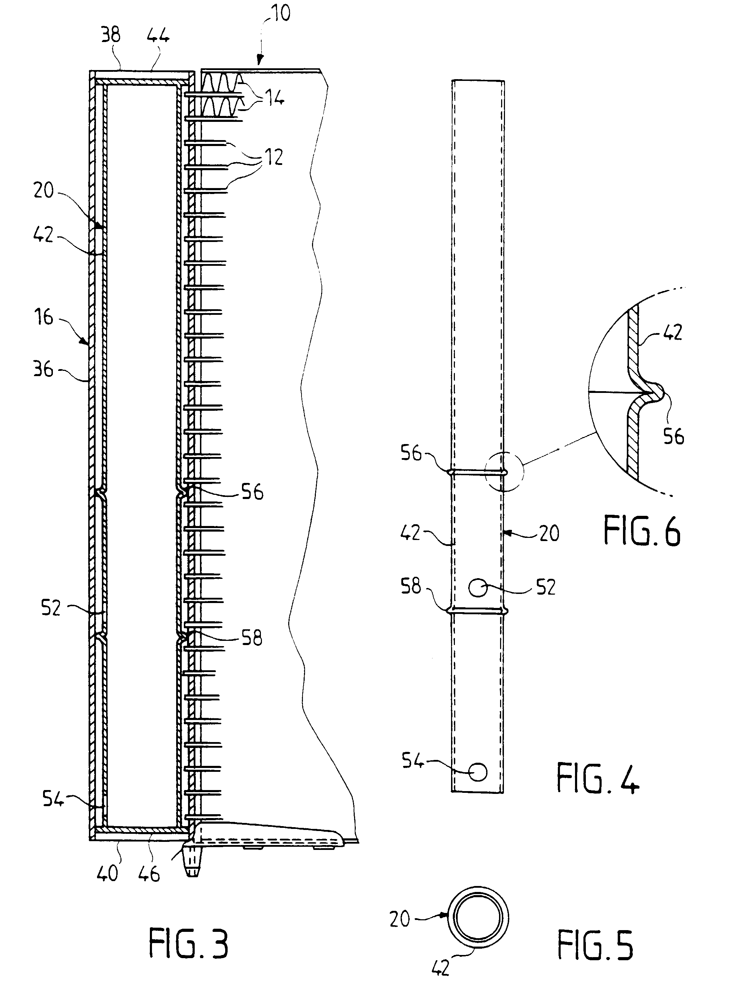

Dans la forme de réalisation des figures 3 à 6, auxquelles on se réfère maintenant, les cloisons transversales annulaires sont obtenues par déformation localisée de la paroi latérale 42 du réservoir, de manière à définir des bourrelets annulaires périphériques 56 et 58 qui viennent en appui contre la face interne de la paroi latérale 36.

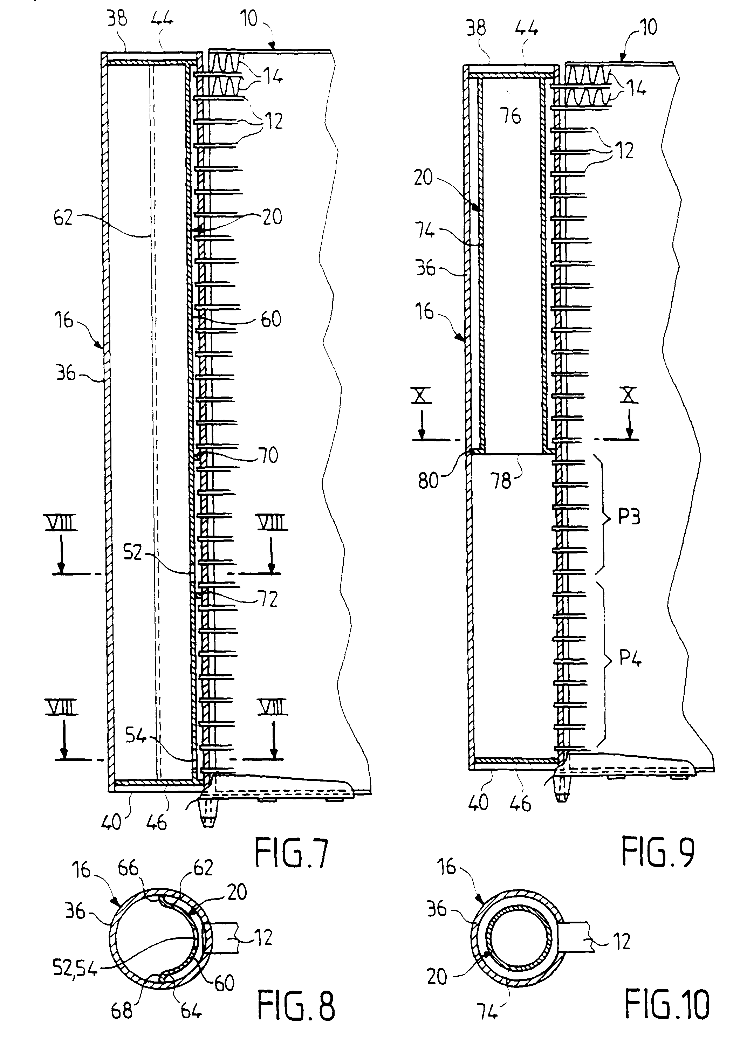

On se réfère maintenant aux figures 7 et 8 qui concernent un condenseur de structure très proche de celle décrite précédemment mais non conforme à l'invention.

Dans ce condenseur, le réservoir 20 comprend une paroi latérale 60 de forme incurvée dont les génératrices sont parallèles à celles de la paroi tubulaire 36 de la boîte collectrice 16. La paroi 60 a une section en forme de U terminée par deux bords parallèles 62 et 64 (figure 8) qui se raccordent à deux génératrices 66 et 68, diamétralement opposées, de la paroi latérale 36. La paroi 60 délimite ainsi à l'intérieur de la boîte collectrice 16 un volume dont la section transversale ressemble à celle d'un croissant et dans lequel débouchent les tubes du faisceau. Cet espace est divisé par deux cloisons transversales 70 et 72, placées aux mêmes endroits que les cloisons 48 et 50 ou que les cloisons 56 et 58, pour définir les compartiments C2, C4 et C5. Les cloisons 70 et 72 ont une forme de croissant et les compartiments C2, C4 et C5 ont également une section en forme de croissant. Par ailleurs, la paroi 60 est munie de deux ouvertures 52 et 54 analogues à celles décrites précédemment.

Le fonctionnement du condenseur des figures 7 et 8 est analogue à celui des figures 1 et 2 ou à celui des figures 3 à 6.

On se réfère maintenant aux figures 9 et 10 pour décrire une autre forme de réalisation de l'invention qui s'apparente à celles décrites précédemment.

Le réservoir 20 comprend ici une paroi latérale 74 de forme tubulaire circulaire, située coaxialement à l'intérieur de la paroi latérale 36 de la boîte collectrice 16. Dans cette forme de réalisation, la paroi 74 s'étend sur une partie seulement de la hauteur de la boîte collectrice 16, dans l'exemple sur sensiblement la moitié de cette hauteur.

La paroi tubulaire 74 présente une extrémité ouverte 76 fermée par une paroi d'extrémité 44 analogue à celle décrite précédemment. Elle présente en outre une extrémité ouverte 78 qui débouche directement dans une seconde partie de la boîte collectrice 16, laquelle est en communication directe avec les tubes des parties P3 et P4 du faisceau. Une cloison annulaire 80 est prévue entre la paroi latérale 36 de la boîte collectrice et la paroi latérale 74 du réservoir, au niveau de son extrémité ouverte 78. Ainsi, un compartiment C2, analogue à celui décrit précédemment, est délimité entre les parois latérales 36 et 74, la paroi d'extrémité 44 et la cloison annulaire 80.

Le fonctionnement du condenseur des figures 9 et 10 est analogue à celui des formes de réalisation décrites précédemment.

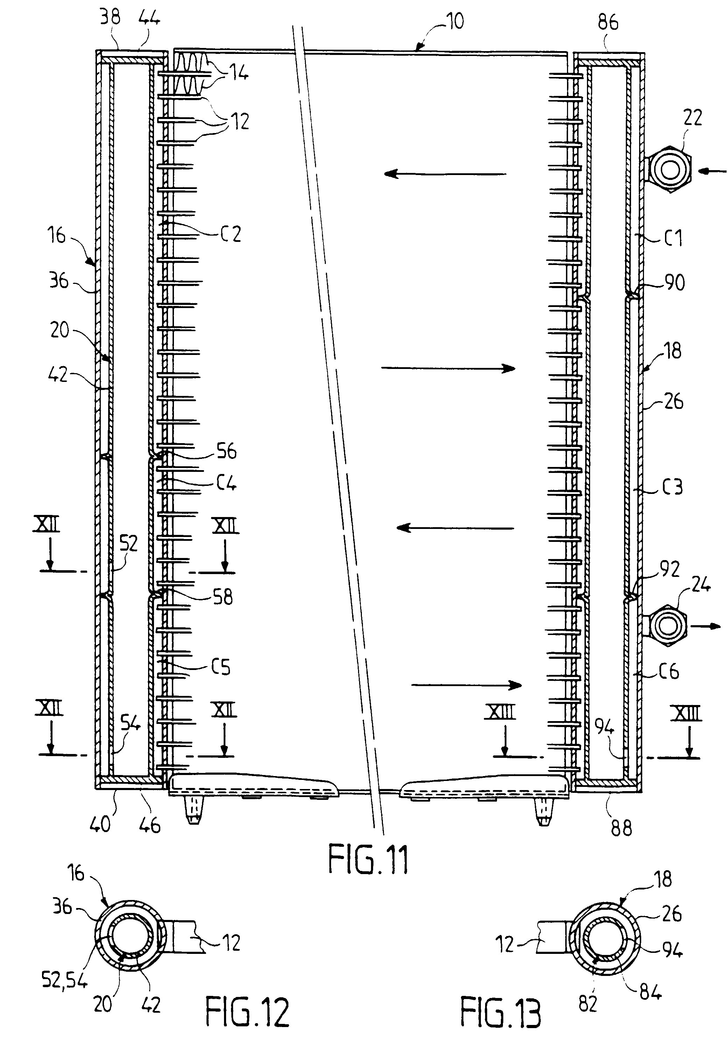

Dans la forme de réalisation des figures 11 à 13, auxquelles on se réfère maintenant, la boîte collectrice 16 est munie d'un réservoir 20 analogue à celui décrit précédemment en référence à la figure 3. Toutefois, la boîte collectrice 16 et le réservoir 20 ont des sections plus faibles que dans la forme de réalisation précédente.

En effet, la seconde boîte collectrice 18 loge également un second réservoir 82 qui s'étend sur toute la hauteur de la seconde boîte collectrice.

Le réservoir 82 comprend une paroi latérale tubulaire 84 de section circulaire, qui est logée coaxialement dans la paroi tubulaire 26. La paroi 84 est fermée par deux parois d'extrémité 86 et 88 qui jouent le rôle des parois d'extrémité 28 et 30 décrites précédemment.

Par ailleurs, la paroi 84 est pliée pour former deux bourrelets annulaires 90 et 92 formant cloison transversale et disposés aux mêmes endroits que les cloisons 32 et 34, comme dans les formes de réalisation décrites précédemment en référence aux figures 1 à 8.

Il en résulte que la boîte collectrice 18 comporte trois compartiments C1, C3 et C6 qui sont ici de configuration annulaire.

La paroi latérale 84 est pourvue d'une ouverture 94 faisant communiquer l'intérieur du réservoir 80 avec le compartiment périphérique C6 de la boîte collectrice 18, dans lequel débouche la sortie 24 du condenseur.

Dans la forme de réalisation des figures 11 à 13, les boîtes collectrices 16 et 18 ont sensiblement le même diamètre, que même que les réservoirs 20 et 82. Ces deux derniers permettent de compenser les variations de volume du fluide frigorigène à l'état liquide.

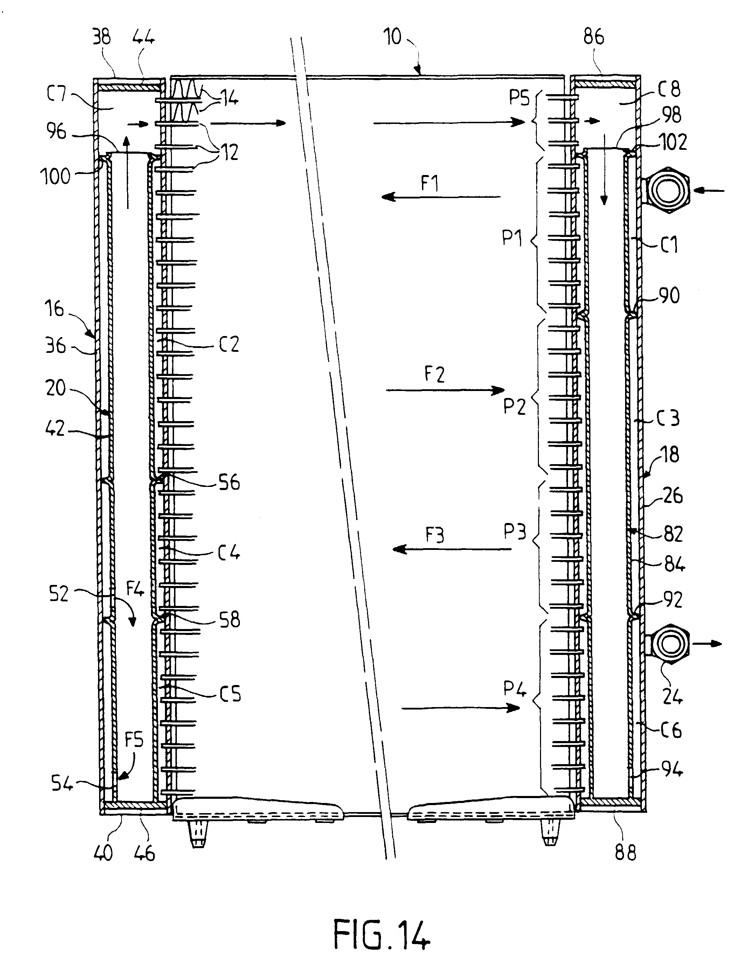

On se réfère maintenant à la forme de réalisation de la figure 14 qui s'apparente à celle des figures 11 à 13.

Comme dans la forme de réalisation précédente, les boîtes collectrices 16 et 18 reçoivent respectivement deux réservoirs 20 et 82.

Toutefois, ces deux réservoirs sont de hauteur plus faible que dans la forme de réalisation précédente et ils présentent deux extrémités ouvertes, respectivement 96 et 98, qui sont espacées des parois d'extrémité respectives 44 et 86. Les extrémités ouvertes 96 et 98 sont entourées par deux cloisons annulaires 100 et 102 obtenues ici par déformation des parois des réservoirs pour former des bourrelets.

L'extrémité ouverte 96 du premier réservoir 20 débouche ainsi dans un compartiment C7, lequel communique par une partie P5 du faisceau (dans l'exemple formé de trois tubes) avec un compartiment C8 formé en partie supérieure de la boîte collectrice 18 et communiquant avec l'intérieur du réservoir 82 par l'extrémité ouverte 98. Cette forme de réalisation permet de séparer, à la fin de la troisième passe (partie P3; flèche F3) les phases liquide et vapeur pour améliorer les performances du condenseur.

En effet, si de la vapeur se trouve introduite dans le réservoir 20, cette vapeur a tendance à s'élever pour gagner le compartiment C7, puis le compartiment C8 au travers de la partie P5 du faisceau, comme montré par la flèche F7. Cette vapeur se trouve alors condensée et parvient à l'état condensé au compartiment C8 pour ensuite gagner l'intérieur du réservoir 82 et être évacuée du condenseur par l'ouverture 94 du réservoir 82 et, de là, par la sortie 24.

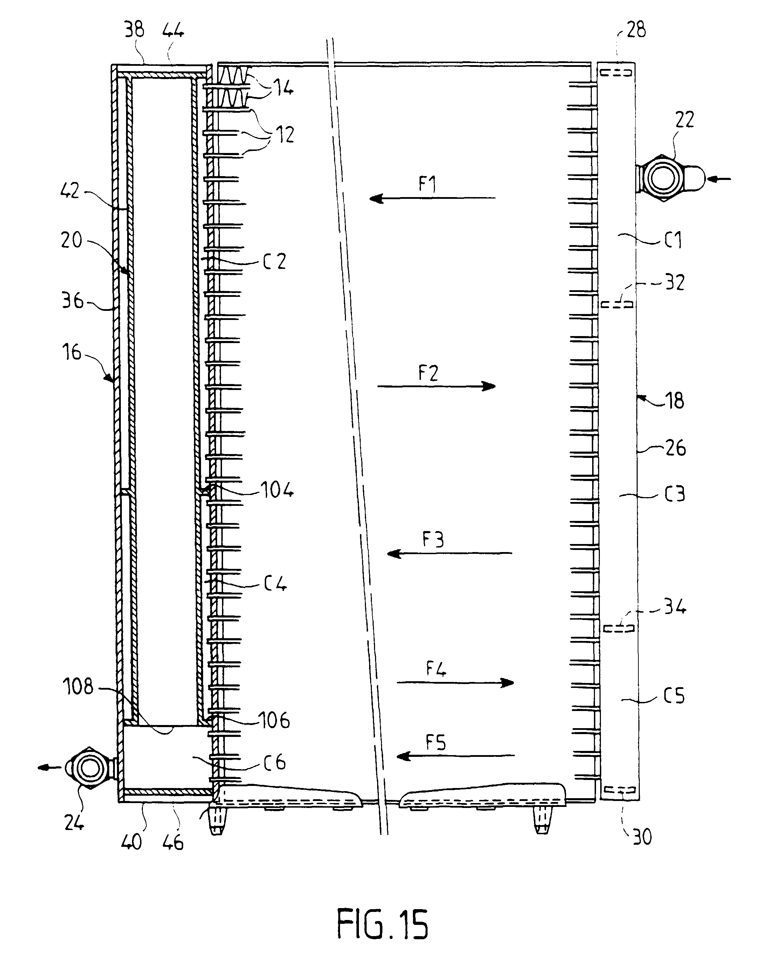

Le condenseur représenté à la figure 15 s'apparente à celui de la figure 1, si ce n'est que deux cloisons transversales 104, 106, sont prévues entre la paroi latérale 36 de la boîte collectrice 16 et la paroi latérale 42 du réservoir. Cependant, contrairement à la forme de réalisation de la figure 1, il n'est prévu aucune ouverture au travers de cette paroi latérale. Deux compartiments C2 et C4 sont ainsi définis entre la paroi latérale du réservoir et la paroi latérale de la boîte collectrice.

Comme on le voit sur la figure 15, la cloison transversale 106 est située près de la paroi d'extrémité 46. Le réservoir comprend ainsi une ouverture d'extrémité 108 qui fait communiquer l'intérieur du réservoir avec un compartiment C6 prévu en partie inférieure de la boîte collectrice 16.

Dans cette forme de réalisation, la sortie 24 du condenseur est prévue sur la boîte collectrice 16 et communique directement avec le compartiment C6. Le fluide frigorigène entre par l'entrée 22 dans la seconde boîte collectrice 18, parcourt ensuite les tubes du faisceau, comme indiqué par les flèches F1, F2, F3, F4 et F5, pour gagner le compartiment C6 avant de quitter le condenseur par la sortie 24 prévue sur la première boîte collectrice 16.

L'invention n'est pas limitée aux formes de réalisation décrites précédemment à titre d'exemple et s'étend à d'autres variantes, notamment en ce qui concerne la disposition relative et le nombre des tubes formant les différentes parties du faisceau.

L'invention trouve une application particulière aux installations de climatisation des véhicules automobiles.

## Revendications

1. Condenseur pour un circuit de réfrigération parcouru par un fluide frigorigène, comprenant un faisceau (10) de tubes (12) monté entre une première boîte collectrice (16), munie d'une paroi latérale tubulaire (36), et une seconde boîte collectrice (18), une entrée (22) pour le fluide frigorigène gazeux, une sortie (24) pour le fluide frigorigène condensé, ainsi qu'un réservoir (20) propre à être traversé par le fluide frigorigène, communiquant, par l'intermédiaire d'au moins une ouverture (52, 54), avec une partie aval (P3, P4) du faisceau, du côté de la sortie (24) du condenseur,
caractérisé en ce que le réservoir (20) est réalisé sous la forme d'un récipient présentant une paroi latérale (42) tubulaire et coaxiale à la paroi latérale tubulaire (36) de la première boîte collectrice (16), espacée à l'intérieur de celle-ci.

2. Condenseur selon la revendication 1, caractérisé en ce que des cloisons transversales (48, 50; 56, 58; 70, 72; 104, 106) sont prévues entre la paroi latérale (36) de la boîte collectrice et la paroi latérale (42) du réservoir (20) pour définir des compartiments périphériques (C2, C4, C5) communiquant avec des parties différentes (P1, P2, P3, P4) du faisceau pour permettre une circulation multi-passe du fluide frigorigène dans le faisceau de tubes.

3. Condenseur selon la revendication 2, caractérisé en ce que la paroi latérale (42) du réservoir (20) comprend une ouverture (52) pour l'entrée du fluide frigorigène provenant d'un compartiment périphérique (C4) et une sortie (54) pour l'évacuation du fluide frigorigène condensé vers un autre compartiment périphérique (C5), lequel communique avec la sortie (24) du condenseur au travers d'une partie (P4) du faisceau (10).

4. Condenseur selon la revendication 2, caractérisé en ce que le réservoir comprend une ouverture d'extrémité (108) qui fait communiquer l'intérieur du réservoir avec un compartiment (C6) prévu dans la première boîte collectrice (16) et communiquant avec la sortie (26), et en ce que cette sortie (26) est prévue sur la première boîte collectrice (16).

5. Condenseur selon l'une des revendications 2 à 4, caractérisé en ce que les cloisons transversales (48, 50; 56, 58) sont annulaires, et en ce que les compartiments périphériques (C2, C4, C5) ont également une section de forme annulaire.

6. Condenseur selon la revendication 5, caractérisé en ce que les cloisons transversales sont formées par des éléments annulaires (48, 50; 104, 106) rapportés entre la paroi latérale (36) de la première boîte collectrice (16) et la paroi latérale (42) du réservoir (20).

7. Condenseur selon la revendication 5, caractérisé en ce que les cloisons transversales sont obtenues par déformation de la paroi latérale (42) du réservoir (20) pour définir des bourrelets annulaires (56, 58).

8. Condenseur selon la revendication 1, caractérisé en ce que la paroi latérale tubulaire (74) du réservoir (20) s'étend sur une partie de la première boîte collectrice (16) en débouchant sur une autre partie de la première boîte collectrice (16) par une extrémité ouverte (78), une cloison annulaire (80) étant prévue entre la paroi latérale (36) de la première boîte collectrice (16) et la paroi latérale (74) du réservoir (20), au niveau de l'extrémité ouverte (78) de cette dernière.

9. Condenseur selon l'une des revendications 1 à 8, caractérisé en ce que la seconde boîte collectrice (18) est dépourvue de réservoir et en ce que l'entrée (22) et la sortie (24) du condenseur sont prévues sur cette seconde boîte collectrice.

10. Condenseur selon l'une des revendications 1 à 8, caractérisé en ce que la seconde boîte collectrice (18) loge également un réservoir (82), lequel communique, par l'intermédiaire d'au moins une ouverture (94), avec une partie aval (P4) du faisceau (10), du côté de la sortie (24) du condenseur.

11. Condenseur selon la revendication 10, caractérisé en ce que la seconde boîte collectrice (18) comprend une paroi latérale tubulaire (26) et en ce que le second réservoir (82) comprend une paroi latérale (84) espacée au moins en partie de la paroi latérale (26) de la boîte collectrice et en ce que des cloisons transversales (90, 92) sont prévues entre la paroi latérale (26) de la seconde boîte collectrice (18) et la paroi latérale (84) du second réservoir (82) pour définir des compartiments périphériques (C1, C3, C6) communiquant avec des parties différentes (P1, P2, P3, P4) du faisceau pour permettre une circulation multi-passe du fluide frigorigène dans le faisceau de tubes.

12. Condenseur selon la revendication 11, caractérisé en ce que la paroi latérale (84) du second réservoir (82) est tubulaire et coaxiale à la paroi latérale tubulaire (26) de la seconde boîte collectrice (18), en ce que les cloisons transversales (90, 92) sont annulaires et en ce que les compartiments périphériques (C1, C3, C6) ont également une section de forme annulaire.

13. Condenseur selon l'une des revendications 11 et 12, caractérisé en ce que la paroi latérale (84) du second réservoir (82) comporte une ouverture (94) faisant communiquer l'intérieur du réservoir avec un compartiment périphérique (C6) de la seconde boîte collectrice (18), dans lequel débouche la sortie (24) du condenseur.

14. Condenseur selon l'une des revendications 10 à 13, caractérisé en ce que le premier réservoir (20) et le second réservoir (82) ont des extrémités ouvertes respectives (96, 98) qui débouchent dans deux compartiments d'extrémité (C7, C8) formés respectivement dans la première boîte collectrice (16) et la seconde boîte collectrice (18), et en ce que ces deux compartiments d'extrémité (C7, C8) communiquent entre eux par une partie (P5) des tubes du faisceau.

## Patentansprüche

1. Kondensator für einen von einem Kühlmittel durchströmten Kühlkreislauf, mit einem Bündel (10) von Rohren (12), das zwischen einem ersten Sammelkasten (16), der mit einer seitlichen, röhrenförmigen Wand (36) versehen ist, und einem zweiten Sammelkasten (18) montiert ist, einem Einlass (22) für das gasförmige Kühlmittel, einem Auslass (24) für das kondensierte Kühlmittel sowie einem Reservoir (20), das von dem Kühlmittel durchströmt werden kann und über wenigstens eine Öffnung (52,54) mit einem stromabwärts gelegenen Teil (P3,P4) des Bündels, auf der Seite des Auslasses (24) des Kondensators, verbunden ist, dadurch gekennzeichnet, dass das Reservoir (20) in Form eines Behälters ausgebildet ist, der eine röhrenförmige seitliche Wand (42) aufweist, die koaxial zu der röhrenförmigen seitlichen Wand (36) des ersten Sammelkastens (16), im Inneren von diesem beabstandet angeordnet ist.

2. Kondensator gemäß dem Anspruch 1, dadurch gekennzeichnet, dass querliegende Trennwände (48,50; 56,58; 70,72; 104,106) zwischen der seitlichen Wand (36) des Sammelkastens und der seitlichen Wand (42) des Reservoirs (20) vorgesehen sind, so dass umlaufende Kammern (C2,C4,C5) definiert sind, die mit unterschiedlichen Teilen (P1,P2,P3,P4) des Bündels verbunden sind, so dass eine Zirkulation ermöglichst wird, bei der das Kühlmittel das Rohrbündel mehrmals durchströmt.

3. Kondensator gemäß dem Anspruch 2, dadurch gekennzeichnet, dass die seitliche Wand (42) des Reservoirs (20) eine Öffnung (52) für den Einlass des Kühlmittels, das von einer umlaufenden Kammer (C4) stammt, und einen Auslass zum Abfluss des kondensierten Kühlmittels in eine andere umlaufende Kammer (C5) aufweist, die mit dem Auslass (24) des Kondensators über ein Teil (P4) des Bündels (10) verbunden ist.

4. Kondensator gemäß dem Anspruch 2, dadurch gekennzeichnet, dass das Reservoir an einem Ende eine Öffnung (108) aufweist, die das Innere des Reservoirs mit einer Kammer (C6) verbindet, die in dem ersten Sammelkasten (16) vorgesehen und mit dem Auslass (26) verbunden ist, und dass dieser Auslass (26) in dem ersten Sammelkasten (16) vorgesehen ist.

5. Kondensator gemäß einem der Ansprüche 2 bis 4, dadurch gekennzeichnet, dass die querliegenden Trennwände (48,50; 56,58) ringförmig sind und dadurch, dass die umlaufenden Kammern (C2,C4,C5) gleichfalls einen ringförmigen Querschnitt haben.

6. Kondensator gemäß Anspruch 5, dadurch gekennzeichnet, dass die querliegenden Trennwände aus ringförmigen Elementen (48,50; 104,106) gebildet sind, die zwischen der seitlichen Wand (36) des ersten Sammelkastens (16) und der seitlichen Wand (42) des Reservoirs (20) angebracht sind.

7. Kondensator gemäß dem Anspruch 5, dadurch gekennzeichnet, dass die querliegenden Trennwände durch Verformung der seitlichen Wand (42) des Reservoirs (20) gebildet sind, so dass sie ringförmige Wülste (56,58) bilden.

8. Kondensator gemäß dem Anspruch 1, dadurch gekennzeichnet, dass sich die röhrenförmige seitliche Wand (74) des Reservoirs (20) über einen Teil des ersten Sammelkastens (16) erstreckt, so dass sie in einen anderen Teil des ersten Sammelkastens (16) mit einem offenen Ende (78) einmündet, wobei eine ringförmige Trennwand (80) zwischen der seitlichen Wand (36) des ersten Sammelkastens (16) und der seitlichen Wand (74) des Reservoirs (20) auf der Höhe des offenen Endes (78) von diesem vorgesehen ist.

9. Kondensator gemäß einem der Ansprüche 1 bis 8, dadurch gekennzeichnet, dass der zweite Sammelkasten (18) kein Reservoir aufweist und dass der Einlass (22) und der Auslass (24) des Kondensators an diesem zweiten Sammelkasten vorgesehen sind.

10. Kondensator gemäß einem der Ansprüche 1 bis 8, dadurch gekennzeichnet, dass der zweite Sammelkasten (18) gleichfalls ein Reservoir (82) aufnimmt, das über wenigstens eine Öffnung (94) mit einem stromabwärts gelegenen Teil (P4) des Bündels (10) auf der Seite des Auslasses des Kondensators verbunden ist.

11. Kondensator gemäß dem Anspruch 10, dadurch gekennzeichnet, dass der zweite Sammelkasten (18) eine seitliche röhrenförmige Wand (26) aufweist und dass das zweite Reservoir (82) eine seitliche Wand (84) aufweist, die von der seitlichen Wand (26) des Sammelkastens wenigstens zum Teil beabstandet ist und dass die querliegenden Trennwände (90,92) zwischen der seitlichen Wand (26) des zweiten Sammelkastens (18) und der seitlichen Wand (84) des zweiten Reservoirs (82) vorgesehen sind, so dass umlaufende Kammern (C1,C3,C6) definiert sind, die mit unterschiedlichen Teilen (P1,P2,P3,P4) des Bündels verbunden sind, wodurch eine Zirkulation ermöglicht wird, bei der das Kühlmittel das Rohrbündel mehrmals durchströmt.

12. Kondensator gemäß dem Anspruch 11, dadurch gekennzeichnet, dass die seitliche Wand (84) des zweiten Reservoirs (82) röhrenförmig und koaxial zur seitlichen röhrenförmigen Wand (26) des zweiten Sammelkastens (18) angeordnet ist, die querliegenden Trennwände (90,92) ringförmig sind und die umlaufenden Kammern (C1,C3,C6) gleichfalls einen ringförmigen Querschnitt aufweisen.

13. Kondensator gemäß einem der Ansprüche 11 und 12, dadurch gekennzeichnet, dass die seitliche Wand (84) des zweiten Reservoirs (82) eine Öffnung (94) aufweist, die das Innere des Reservoirs mit der umlaufenden Kammer (C6) des zweiten Sammelkastens (18) verbindet, in den der Auslass (24) des Kondensators einmündet.

14. Kondensator gemäß einem der Ansprüche 10 bis 13, dadurch gekennzeichnet, dass das erste Reservoir (20) und das zweite Reservoir (82) jeweils ein offenes Ende (96,98) aufweisen, das in eine von zwei Endkammern (C7,C8) einmündet, welche durch den ersten Sammelkasten (16) bzw. den zweiten Sammelkasten (18) gebildet sind und dadurch, dass diese zwei Endkammern (C7,C8) untereinander durch einen Teil (P5) der Rohre des Bündels verbunden sind.

## Claims

1. A condenser for a refrigerating circuit through which a refrigerant fluid flows, comprising a bundle (10) of tubes (12) which are connected between a first header (16) which has a tubular lateral wall (36), and a second header (18), an inlet (22) for the refrigerant fluid in the gaseous state, an outlet (24) for the condensed refrigerant fluid, and a reservoir (20) arranged for the refrigerant fluid to pass through it and communicating, through at least one aperture (52, 54), with a downstream part (P3, P4) of the bundle on the same side as the outlet (24) of the condenser, characterised in that the reservoir (20) is made in the form of a receptacle having a lateral wall (42) which is tubular and coaxial with the tubular lateral wall (36) of the first header (16), from which it is spaced within the latter.

2. A condenser according to Claim 1, characterised in that transverse partitions (48, 50; 56, 58; 70, 72; 104, 106) are arranged between the lateral wall (36) of the header and the lateral wall (42) of the reservoir (20) so as to define peripheral compartments (C2, C4, C5) which are in communication with various parts (P1, P2, P3, P4) of the bundle, whereby to enable the refrigerant fluid to flow in multiple passes within the bundle of tubes.

3. A condenser according to Claim 2, characterised in that the lateral wall (42) of the reservoir (20) includes an aperture for admission of the refrigerant fluid coming from a peripheral compartment (C4), and an outlet (54) for evacuation of the condensed refrigerant fluid to another peripheral compartment (C5), which is in communication with the outlet (24) of the condenser through a part (P4) of the bundle (10) .

4. A condenser according to Claim 2, characterised in that the reservoir terminates in an opening (108) which puts the interior of the reservoir into communication with a compartment (C6) arranged within the first header (16) and communicating with the outlet (26), and in that the said outlet (26) is arranged on the first header (16).

5. A condenser according to one of Claims 2 to 4, characterised in that the transverse partitions (48, 50; 56, 58) are annular, and in that the peripheral compartments (C2, C4, C5) also have an annular cross section.

6. A condenser according to Claim 5, characterised in that the transverse partitions are defined by annular elements (48, 50; 104, 106) which are mounted between the lateral wall (36) of the first header (16) and the lateral wall (42) of the reservoir (20).

7. A condenser according to Claim 5, characterised in that the transverse partitions are obtained by deformation of the lateral wall (42) of the reservoir (20); whereby to define annular beads (56, 58).

8. A condenser according to Claim 1, characterised in that the tubular lateral wall (74) of the reservoir (20) extends over part of the first header (16), being open in another part of the first header (16) through an open end (78), an annular partition (80) being arranged between the lateral wall (36) of the first header (16) and the lateral wall (74) of the reservoir (20), at the level of the open end (78) of the latter.

9. A condenser according to one of Claims 1 to 8, characterised in that the second header (18) has no reservoir, and in that the inlet (22) and outlet (24) of the condenser are arranged on the said second header.

10. A condenser according to one of Claims 1 to 8, characterised in that the second header (18) further contains a reservoir (82) which is in communication, through at least one aperture (94), with a downstream part (P4) of the bundle (10) on the same side as the outlet (24) of the condenser.

11. A condenser according to Claim 10, characterised in that the second header (18) includes a tubular lateral wall (26), and in that the second reservoir (82) includes a lateral wall (84) which is spaced at least partly from the lateral wall (26) of the header, and in that transverse partitions (90, 92) are arranged between the lateral wall (26) of the second header (18) and the lateral wall (84) of the second reservoir (82), so as to define peripheral compartments (C1, C3, C6) which are in communication with various parts (P1, P2, P3, P4) of the bundle, whereby to enable the refrigerant fluid to flow in multiple passes within the bundle of tubes.

12. A condenser according to Claim 11, characterised in that the lateral wall (84) of the second reservoir (82) is tubular and coaxial with the tubular lateral wall (26) of the second header (18), in that the transverse partitions (90, 92) are annular, and in that the peripheral compartments (C1, C3, C6) also have an annular cross section.

13. A condenser according to Claim 11 or Claim 12, characterised in that the lateral wall (84) of the second reservoir (82) has an aperture (94) which puts the interior of the reservoir into communication with a peripheral compartment (C6) of the second header (18) into which the outlet (24) of the condenser is open.

14. A condenser according to one of Claims 10 to 13, characterised in that the first reservoir (20) and the second reservoir (82) have respective open ends (96, 98) which are open into two end compartments (C7, C8) formed in the first header (16) and second header (18) respectively, and in that the said two end compartments (C7, C8) are in communication with each other through a part (P5) of the tubes in the bundle.
